# DEMANDE DE BREVET EUROPEEN

(11) **EP 4 144 583 A1**
(43) Date de publication de la demande: **08.03.2023**
(21) Numéro de dépôt: 22192937.5
(22) Date de dépôt: 30.08.2022
(51) Int. Cl.: B60P 1/44, A01D 46/28

(54) **DISPOSITIF DE SOULEVEMENT D'UNE CHARGE, ET MACHINE AGRICOLE COMPRENANT UN TEL DISPOSITIF**

(30) Priorité: 01.09.2021 FR 2109128
(71) Demandeur: Delecroix, 59270 Bailleul (FR)
(72) Inventeur: TOUBEAUX, Jean-François, 59270 BAILLEUL (FR); DENHAENE, Bertrand, 59270 BAILLEUL (FR)
(74) Mandataire: Cabinet Beau de Loménie

(57) **Abrégé**

L'invention concerne un dispositif de soulèvement (1) d'une charge (2), vers une plateforme surélevée, comportant :
- un bâti (6) solidaire de ladite plateforme surélevée,
- un moyen de réception mobile (8) comprenant une surface de réception (20) configurée pour recevoir ladite charge, et
- un moyen de levage (10) monté sur le bâti (6) et configuré pour déplacer le moyen de réception (8) d'une position basse située sous la plateforme, à une position haute située sensiblement à la hauteur de la plateforme.

Le moyen de levage (8) est configuré pour orienter différemment, en position basse et en position haute, la surface de réception (20) du moyen de réception (8), par rapport à l'horizontale.

L'invention concerne également une machine agricole comprenant une plateforme de stockage de caisses, et un ou plusieurs dispositifs de soulèvement (1).

## Description

### Domaine Technique

La présente invention concerne le domaine des machines agricoles, notamment pour les vendanges. En particulier, la présente invention concerne les dispositifs pour soulever des charges afin de les charger sur une plateforme telle qu'une remorque.

### Technique antérieure

Il est connu d'utiliser des caisses pour récupérer les raisins sur les vignes, lors des vendanges. Les caisses peuvent notamment être remplies en y déversant le raisin récupéré par la personne en charge des vendanges, soit directement soit depuis un contenant plus petit et plus léger porté par ladite personne, par exemple un panier. De telles caisses, une fois remplies, sont alors transportées à l'extrémité des rangs de vignes, jusqu'à une remorque, où elles sont ensuite acheminées à l'aide d'un engin agricole tel qu'un tracteur vers le pressoir.

Cependant, de telles caisses, une fois remplies, présentent un poids généralement supérieur à 50kg, ce qui rend fatiguant et potentiellement dangereux leur transport par les personnes en charge des vendanges.

De plus, les raisins peuvent être abimés lors du vidage des grappes directement ou des petits contenants dans les caisses, ce qui peut diminuer la qualité des grains de raisin.

Il existe des dispositifs permettant de récupérer les caisses remplies de raisins dans les rangs de vigne. Cependant, de tels dispositifs ne sont utilisés qu'une fois que les vendanges du rang de vignes entier sont effectuées, lorsque les différentes caisses présentes dans le rang de vignes sont déjà remplies de raisins. De tels dispositifs sont donc utilisés après les vendanges, après avoir laissé les raisins dans les caisses pendant la durée des vendanges du rang de vignes. Cela rallonge donc la durée des vendanges, en ajoutant le temps de passage du dispositif de récupération des caisses, dans chaque rang de vignes, en fin de vendanges. Surtout, l'utilisation de tels dispositifs rallonge le temps entre la cueillette des raisins et le pressurage, ce qui altère la qualité des grains avant le pressurage.

Il est alors nécessaire de pouvoir proposer un dispositif permettant de soulager le travail des personnes en charge des vendanges, en leur évitant de devoir porter des caisses lourdes remplies de raisins, tout en permettant la récupération des caisses de raisins au fur et à mesure, sans étape supplémentaire ultérieure.

### Exposé de l'invention

La présente invention vise à résoudre les différents problèmes techniques énoncés précédemment. En particulier la présente invention vise à proposer un dispositif permettant de récupérer des caisses, en particulier de raisins, dans les rangs de vignes, au fur et à mesure des vendanges. Par ailleurs, l'invention vise également à proposer un dispositif de levage permettant de limiter les efforts physiques des personnes effectuant des vendanges dans des rangs de vignes, lors de la manipulation des caisses remplies de raisins.

Ainsi, selon un aspect, il est proposé un dispositif de soulèvement, ou de chargement ou de levage, d'une charge, par exemple une caisse, vers une plateforme surélevée, de préférence mobile. Le dispositif de soulèvement comporte :
- un bâti configuré pour être monté sur, ou solidaire de, ladite plateforme surélevée,
- un moyen de réception mobile comprenant une surface de réception configurée pour recevoir ladite charge, de préférence pour supporter ou porter ladite charge, et
- un moyen de levage monté sur le bâti et configuré pour déplacer le moyen de réception d'une position basse située sous la plateforme, à une position haute située sensiblement à la hauteur de la plateforme.

Ainsi, le dispositif est particulièrement adapté à la récupération de charges lourdes dans des rangs de vignes. En effet, le dispositif est destiné à fonctionner sur une plateforme surélevée, ce qui est particulièrement adapté à un usage dans les rangs de vignes pour lequel la plateforme devra se déplacer au-dessus des vignes. Le dispositif permet d'une part à la plateforme de parcourir les rangs de vignes, en se positionnant au-dessus, pour pouvoir récupérer les caisses de raisins au fur et à mesure des vendanges. D'autre part, le dispositif selon la présente invention facilite le chargement desdites caisses remplies sur la plateforme surélevée, grâce à un moyen de réception mobile configuré pour passer d'une position basse, au niveau de la personne effectuant les vendanges ou au niveau du sol, à une position haute correspondant au niveau de la plateforme surélevée.

Le moyen de réception mobile permet donc de faciliter le chargement des caisses remplies sur la plateforme, malgré la surélévation de celle-ci. Par ailleurs, grâce à la surélévation de la plateforme, il est alors possible d'effectuer le chargement des caisses au fur et à mesure des vendanges, au sein même des rangs de vignes, et non après les vendanges ou uniquement aux extrémités des rangs de vignes. On limite ainsi le temps entre la vendange du raisin et le pressurage, et récupérant directement, et au fur et à mesure, les raisins sur la plateforme surélevée, ce qui permet ensuite son acheminement rapide vers le pressoir. La caisse est notamment positionnée sur, ou au-dessus de, la surface de réception.

Préférentiellement, le bâti est configuré pour être monté de manière amovible et/ou réglable en position, sur la plateforme surélevée. Par exemple, le bâti peut comprendre un moyen de montage amovible et/ou réglable en position, sur ladite plateforme surélevée.

Ainsi, le dispositif de soulèvement peut être positionné à la position voulue sur la plateforme surélevée, et plus particulièrement peut être positionné en regard du rang de vigne dans lequel il sera destiné à récupérer les caisses remplies de raisins. Il est alors avantageusement possible d'obtenir une machine agricole avec plusieurs dispositifs de soulèvement tels que décrits précédemment, chaque dispositif de soulèvement étant positionné en regard du rang de vignes correspondant. La machine agricole n'est alors plus limitée à un seul dispositif de soulèvement, mais peut au contraire comprendre une pluralité de dispositifs de soulèvement, positionné chacun dans un rang de vignes spécifique, de manière à permettre des opérations de vendanges en parallèles dans lesdits rangs de vignes, au fur et à mesure de l'avancée de la machine agricole dans lesdits rangs de vignes. La récupération des caisses remplies de raisins peut alors se faire au fur et à mesure des vendanges, dans plusieurs rangs de vignes simultanément, ce qui permet d'optimiser l'utilisation de la plateforme surélevée et de la machine agricole.

Préférentiellement, le moyen de levage est configuré pour orienter différemment, en position basse et en position haute, la surface de réception du moyen de réception, par rapport à l'horizontale.

Le moyen de réception mobile présente également une surface de réception dont l'orientation, en position basse et en position haute, est différente de manière à faciliter la manipulation des caisses. Plus précisément, le moyen de réception mobile est configuré pour orienter la surface de réception, en position basse, à l'opposé de la plateforme surélevée, c'est-à-dire vers la personne remplissant la caisse, de manière à lui faciliter le placement de la caisse remplie sur la surface de réception, ou bien le remplissage progressif de la caisse si celle-ci est déjà pré-positionnée vide sur la surface de réception ; et pour orienter la surface de réception, en position haute, vers la plateforme de manière à faciliter le transfert de la caisse remplie depuis la surface de réception jusqu'à la plateforme de transport. Le moyen de réception mobile, en permettant d'une part le soulèvement de la caisse remplie jusqu'à la hauteur de la plateforme surélevée, et d'autre part le transfert facilité de la caisse vers ladite plateforme surélevée, limite ainsi les efforts à exercer par la personne effectuant les vendanges.

Préférentiellement, le moyen de levage est configuré pour faire pivoter la surface de réception du moyen de réception, par rapport à l'horizontale, entre la position basse et la position haute.

Afin de changer d'orientation, le moyen de levage peut être configuré pour faire pivoter la surface de réception par rapport à l'horizontale, de manière à obtenir, en position basse et en position haute, l'orientation voulue par rapport à l'horizontale.

Préférentiellement, en position haute, le moyen de réception vient se positionner dans le prolongement du bâti, selon une direction longitudinale sensiblement horizontale.

Le moyen de réception est ainsi configuré pour se retrouver, en position haute, à la même hauteur que le bâti, ce qui facilite le transfert de la caisse depuis le moyen de réception jusqu'au bâti.

Préférentiellement, le moyen de levage est configuré pour incliner, par rotation autour d'une direction perpendiculaire à un plan vertical comprenant la direction longitudinale, la surface de réception à l'opposé du bâti, en position basse, et/ou pour incliner, par rotation autour d'une direction perpendiculaire à un plan vertical comprenant la direction longitudinale, la surface de réception en direction du bâti, en position haute.

On considère dans le cas présent que le dispositif de soulèvement est positionné, selon la direction du rang de vignes, entre la plateforme surélevée sur laquelle sont stockées les caisses, et la personne remplissant la caisse de raisins en effectuant les vendanges. Ainsi, en position basse, la surface de réception est orientée vers la personne effectuant les vendanges, afin de lui faciliter le chargement de la caisse remplie sur la surface de réception ou le remplissage progressif de la caisse avec les raisins, et, en position haute, la surface de réception est orientée vers la plateforme vers laquelle la caisse remplie de raisins est destinée à être transférée. Le moyen de levage est ainsi configuré pour effectuer une rotation de la surface de réception autour d'un axe horizontal perpendiculaire à la direction du rang de vignes, lorsque la surface de réception passe d'une position basse à une position haute.

Préférentiellement, le moyen de levage comporte, de chaque côté, deux bielles sensiblement parallèles dont les premières extrémités sont reliées, par des liaisons pivot, au bâti et dont les deuxièmes extrémités sont reliées, par des liaisons pivot, au moyen de réception.

Afin de permettre la translation, sensiblement circulaire, de la surface de réception entre la position basse et la position haute, le moyen de levage comporte, de chaque côté, deux bielles sensiblement parallèles, reliant, via des liaisons pivots, le moyen de réception mobile au bâti. On obtient ainsi, de chaque côté du dispositif de soulèvement d'une charge, un système de parallélogramme déformable permettant de positionner le moyen de réception mobile dans des positions haute et basse.

Préférentiellement, les premières extrémités des deux bielles sont alignées sur le bâti selon une orientation sensiblement verticale, de préférence avec un angle inférieur à 10° par rapport à la verticale, par exemple 5°, et dans lequel les deuxièmes extrémités des deux bielles sont alignées sur le moyen de réception selon une orientation sensiblement verticale, de préférence avec un angle inférieur à 10° par rapport à la verticale, par exemple 5°.

Le système de bielles du moyen de levage ne correspond pas, selon un mode de réalisation, à un parallélogramme strict, de manière à pouvoir faire pivoter la surface de réception entre la position basse et la position haute. Ainsi, le système de bielles du moyen de levage peut être configuré, selon un premier aspect, en quadrilatère avec les extrémités de bielles montées avec un angle par rapport à la direction verticale, par exemple inférieur à 10°.

Préférentiellement, les premières extrémités des deux bielles sont alignées sur le bâti avec un premier angle par rapport à la verticale, et les deuxièmes extrémités des deux bielles sont alignées sur le moyen de réception avec deuxième angle par rapport à la verticale qui est différent du premier angle.

En modifiant ainsi la géométrie du quadrilatère formé par les deux bielles sensiblement parallèles, il devient alors possible d'ajuster la position, et plus particulièrement l'orientation de la surface de réception entre la position haute et la position basse du moyen de réception mobile. Il est également possible de limiter les blocages du moyen de levage, notamment en raison d'éventuels jeux sur les longueurs des bielles ou sur les positions des extrémités des bielles.

Préférentiellement, la distance entre les deuxièmes extrémités des deux bielles est plus grande que la distance entre les premières extrémités des deux bielles.

Selon un autre aspect, il est également possible de prévoir des distances entre les extrémités de deux bielles qui soient légèrement différentes. Cela permet aussi de modifier la géométrie du quadrilatère formé par les bielles sensiblement parallèles du moyen de levage, et donc de pouvoir aussi modifier l'orientation de la surface de réception entre la position haute et la position basse du moyen de réception mobile.

Préférentiellement, le moyen de levage comporte également, au moins d'un côté et de préférence de chaque côté, une butée configurée pour maintenir la distance entre les deux bielles supérieure à une valeur déterminée.

La butée permet de limiter le rapprochement des deux bielles sensiblement parallèles, entre elles, notamment lors des changements entre les positions haute et basse. La butée permet ainsi de diminuer les risques de frottement ou de blocage entre les deux bielles, en les maintenant toujours à une distance minimale entre elles, qui correspond à la largeur de la butée.

Préférentiellement, le dispositif comporte également un moyen d'assistance, par exemple un vérin hydraulique, configuré pour entraîner le moyen de levage, au moins de la position basse à la position haute.

Afin de faciliter le passage de la position basse à la position haute, notamment lorsqu'une caisse de raisins est positionnée sur la surface de réception, le dispositif de soulèvement d'une charge peut comprendre un moyen d'assistance. Le moyen d'assistance peut être passif, c'est-à-dire venir en complément de l'action de l'utilisateur sur le moyen de levage, ou bien actif, c'est-à-dire actionner directement le moyen de levage.

Préférentiellement, le moyen d'assistance s'étend sensiblement selon la diagonale du quadrilatère formé par les deux bielles.

Dans le cas du moyen de levage comportant deux paires de bielles sensiblement parallèles, le moyen d'assistance est de manière avantageuse positionné selon une diagonale du quadrilatère formé par les bielles sensiblement parallèles, de manière à pouvoir déplacer efficacement le moyen de réception mobile entre les positions haute et basse.

Préférentiellement, le bâti présente une forme d'équerre avec une portion verticale destinée à venir se fixer ou à être solidaire de la plateforme, et une portion horizontale à proximité d'une extrémité supérieure de la portion verticale, et destinée à venir dans le prolongement du moyen de réception en position haute et comportant, de préférence, des rouleaux libres en rotation.

Le bâti comporte ainsi d'une part une portion destinée à permettre sa fixation et sa solidarisation sur la plateforme surélevée, et d'autre part une portion destinée à se positionner entre la surface de réception, en position haute, et la plateforme surélevée. La portion horizontale forme donc une étape intermédiaire lors du déplacement de la caisse depuis la surface de réception jusqu'à la plateforme surélevée. Afin de faciliter un tel déplacement de la caisse, la portion horizontale du bâti peut ainsi comprendre des rouleaux montés libres en rotation, ce qui permet un glissement de la caisse avec des frottements réduits lors de son déplacement. Par ailleurs, afin de permettre une orientation correcte du dispositif de soulèvement, la portion verticale du bâti, par exemple le moyen de montage, peut comprendre un moyen d'inclinaison réglable configuré pour pouvoir orienter, notamment dans un plan vertical, le dispositif de soulèvement, et plus particulièrement le bâti, par rapport à la plateforme surélevée, notamment par rapport au chant de la plateforme surélevée sur lequel le dispositif de soulèvement est monté.

Préférentiellement, le moyen de levage et/ou le moyen de réception comporte au moins une butée configurée pour se déployer afin de maintenir la charge sur le moyen de réception lorsque ledit moyen de réception n'est pas en position haute, et configurée pour s'escamoter lorsque le moyen de réception est en position haute.

La butée a pour but de maintenir la caisse en position sur la surface de réception, lors du passage de la position basse à la position haute du moyen de réception mobile. En particulier, en raison de l'inclinaison de la surface de réception lors du passage de la position basse à la position haute, la caisse pourrait être susceptible de glisser de la surface de réception avant même que le moyen de réception mobile soit arrivé en position haute. Afin d'éviter un tel glissement de la caisse, une butée peut être prévue pour bloquer la caisse sur la surface de réception lorsque celle-ci n'est pas en position haute.

Préférentiellement, le bâti et/ou le moyen de réception comporte au moins un rail périphérique s'étendant au moins partiellement autour d'une zone de déplacement de la charge sur le dispositif de soulèvement, de préférence avec une portion inférieure sensiblement verticale et une portion supérieure évasée, par rapport à la verticale, vers l'extérieur.

Un tel rail périphérique améliore le maintien de la charge sur le dispositif de soulèvement, et permet également de faciliter le dépôt de la charge sur la surface de réception.

Préférentiellement, le bâti est monté pivotant sur le moyen de montage, et le bâti comprend un moyen de relevage, par exemple un vérin, notamment hydraulique, configuré pour incliner le bâti vers le haut par rapport au moyen de montage, notamment autour d'une direction perpendiculaire à un plan vertical comportant la direction longitudinale.

Un tel montage du bâti permet notamment de relever le bâti mais également le moyen de réception, en particulier en position haute, lorsque le dispositif de soulèvement n'est pas utilisé mais est déplacé dans le champ, par exemple lors de manœuvres. Il est alors possible d'augmenter la hauteur du dispositif de soulèvement, notamment celle du bâti, pour faciliter les manœuvres. De plus, un tel montage peut également permettre, en configuration d'utilisation, de réorienter horizontalement le moyen de réception lorsque le dispositif de soulèvement est utilisé sur un terrain incliné par rapport à l'horizontale.

Selon un autre aspect, il est également proposé une machine agricole, de préférence mobile, pour le chargement de caisses, de préférence de raisins, comprenant une plateforme de stockage de caisses, notamment surélevée, et un ou plusieurs dispositifs de soulèvement tels que décrits précédemment, par exemple 2, 3, 4 ou 5, et éventuellement un moyen de fixation à un engin agricole.

La machine agricole comporte ainsi la plateforme surélevée de stockage et le ou les dispositifs de soulèvement permettant le chargement des caisses sur ladite plateforme, lors de son déplacement dans les rangs de vignes. En particulier, la plateforme surélevée s'étendant au-dessus des rangs de vignes, la machine agricole peut comprendre plusieurs dispositifs de soulèvement disposés parallèlement entre eux, chaque dispositif de soulèvement étant destiné à venir se positionner au niveau d'un rang de vignes. Il est donc possible d'effectuer la récupération des caisses de raisins au fur et à mesure des vendanges, dans plusieurs rangs de vignes en même temps.

Préférentiellement, la hauteur, par rapport au sol, de la surface de réception, en position basse, est comprise entre 20cm et 100cm, et plus préférentiellement entre 40cm et 80cm.

Une telle hauteur de la surface de réception, en position basse, est particulièrement avantageuse lorsque la caisse est positionnée sur la surface de réception lors de son remplissage, et non uniquement une fois complètement remplie. En effet, une telle hauteur de la surface de réception permet alors un remplissage plus facile pour les personnes en charge des vendanges. En effet, la caisse positionnée sur la surface de réception est surélevée par rapport au sol, et évite ainsi aux personnes en charge des vendanges, de devoir se baisser pour la remplir de raisins. De plus, une telle hauteur de la surface de réception permet également de limiter la hauteur de chute des raisins lors du remplissage de la caisse directement avec les grappes ou depuis le contenant utilisé par les personnes en charge des vendanges : on limite ainsi les éventuels chocs et les éventuelles dégradations sur les grains de raisins, durant les vendanges, ce qui conduit à une meilleure qualité des raisins ainsi vendangés.

Préférentiellement, la machine agricole comprend également un ou plusieurs convoyeurs montés sur la plateforme, de préférence de chaque côté de la plateforme, et au moins un dispositif de soulèvement tel que décrit précédemment, par exemple 2 ou 3, monté sur le ou chaque convoyeur.

Afin d'augmenter le nombre de rangs de vignes dans lesquels les caisses peuvent être récupérées en même temps par la machine agricole, ladite machine agricole peut également comprendre un ou plusieurs convoyeurs, s'étendant perpendiculairement aux rangs des vignes, et le long desquels un ou plusieurs dispositifs de soulèvement peuvent être prévus. On augmente ainsi la largeur de la machine agricole, de manière à pouvoir l'utiliser simultanément dans un nombre plus grand de rangs de vignes.

Préférentiellement, la machine agricole comprend également un moyen de support, par exemple une ou plusieurs roues montées sur vérin, configuré pour permettre un maintien de la plateforme dans un plan sensiblement horizontal lors de ses déplacements.

Afin d'assurer la stabilité et l'inclinaison de la plateforme surélevée lors de ses déplacements au sein des rangs de vignes, la machine agricole peut également comporte une ou plusieurs roues destinées à rouler sur le sol et reliées à la plateforme surélevée via un moyen d'ajustement, tel un vérin. Par action sur le vérin, ou par ajustement passif de celui-ci, la machine agricole peut bénéficier d'un soutien mécanique supplémentaire efficace, en plus de celui fourni par l'engin agricole entraînant ladite machine agricole.

### Brève description des dessins

[Fig. 1] La figure 1 représente une vue en perspective, de haut, d'un dispositif de soulèvement d'une charge selon la présente invention ;
[Fig. 2] La figure 2 représente une vue en perspective, de bas, du dispositif de soulèvement d'une charge illustré à la figure 1 ;
[Fig. 3] La figure 3 représente une vue de côté, en position basse, du dispositif de soulèvement d'une charge illustré à la figure 1 ;
[Fig. 4] La figure 4 représente une vue de côté, en position haute, du dispositif de soulèvement d'une charge illustré à la figure 1 ;
[Fig. 5] La figure 5 représente une machine agricole avec des convoyeurs et plusieurs dispositifs de soulèvement d'une charge ;
Fig. 6] La figure 6 représente une vue de côté, en position haute, d'un dispositif de soulèvement d'une charge selon un deuxième mode de réalisation, en configuration d'utilisation, et
Fig. 7] La figure 7 représente une vue de côté, en position haute, du dispositif de soulèvement illustré à la figure 6, en configuration relevée.

### Description des modes de réalisation

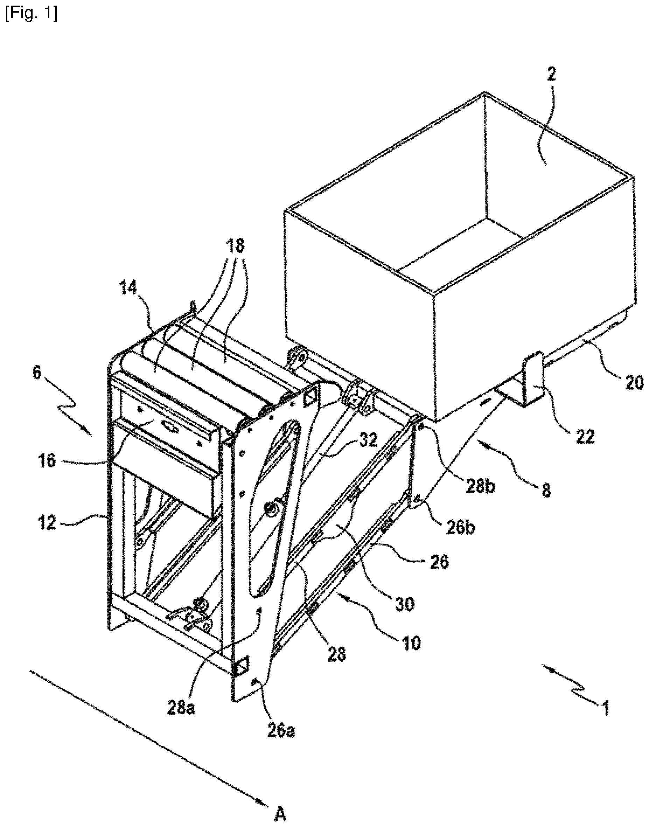

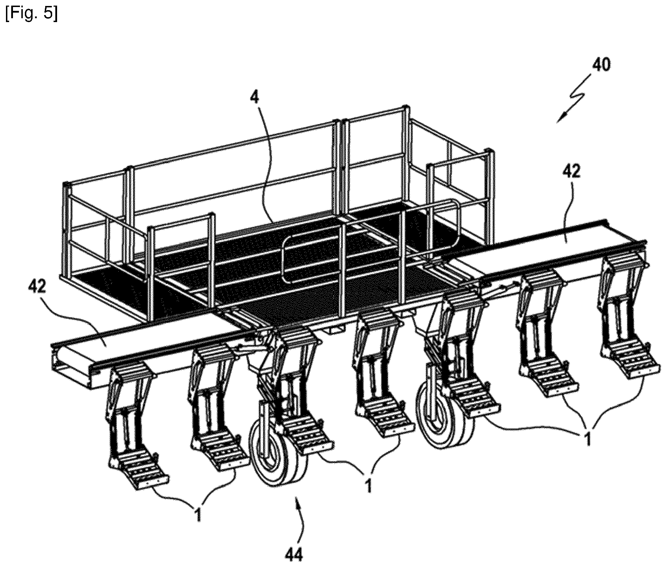

La figure 1 représente, vue en perspective, un dispositif de soulèvement 1 d'une charge 2, selon la présente invention. La charge 2 peut être par exemple une caisse destinée à être remplie de raisins lors de vendanges, et à être placée dans un rang de vignes lors de son remplissage jusqu'à son chargement sur une plateforme surélevée 4 (voir figure 5) se déplaçant au-dessus des rangs de vignes, par un dispositif de soulèvement 1 selon la présente invention.

Le dispositif de soulèvement 1 comporte un bâti 6, un moyen de réception mobile 8, et un moyen de levage 10.

Le bâti 6 présente, dans le cas présent, une forme générale coudée avec une portion verticale 12 destinée à venir se fixer à la plateforme surélevée 4, par exemple à un bord ou côté de la plateforme surélevée 4, et une portion horizontale 14 destinée à venir sensiblement dans le prolongement, ou la continuité, de la surface supérieure de la plateforme surélevée 4.

Afin de solidariser le dispositif de soulèvement 1 à la plateforme surélevée 4, le bâti 6 peut comprendre, au niveau de la portion verticale 12, un moyen de montage 16 configuré pour coopérer avec le chant de la plateforme surélevée 4 de manière à pouvoir s'y clipser ou s'y déclipser par rotation autour d'un axe horizontal. Un tel moyen de montage 16 permet ainsi d'installer facilement et rapidement un ou plusieurs dispositifs de soulèvement 1 sur une plateforme surélevée 4, avant de récupérer les charges 2, puis de les retirer de la plateforme surélevée 4 une fois toutes les charges 2 récupérées. Par ailleurs, les dispositifs de soulèvement 1 peuvent ainsi également être positionnés aux endroits voulus le long du bord de la plateforme surélevée 4, en fonction de la distance séparant les rangs de vignes entre eux. Il est notamment possible de régler la position de chaque dispositif de soulèvement 1 sur la largeur de la plateforme surélevée 4 de manière à les faire coïncider avec les positions des rangs de vignes correspondants.

Le bâti 6, et notamment le moyen de montage 16, peut également comprendre un moyen d'inclinaison réglable (non représenté) configuré pour pouvoir orienter, notamment dans un plan vertical, le dispositif de soulèvement 1, et plus particulièrement le bâti 6, par rapport à la plateforme surélevée 4, notamment par rapport au chant de la plateforme surélevée 4 sur lequel le dispositif de soulèvement 1 est monté. Le moyen d'inclinaison réglable peut par exemple comprendre une tige filetée et un écrou permettant de régler la distance entre une partie du bâti 6 et une partie de la plateforme surélevée 4. Un tel moyen d'inclinaison réglable peut alors permettre d'orienter verticalement le dispositif de soulèvement 1, notamment lorsque la machine agricole n'est pas sur un terrain plat mais au contraire sur une côte, et que la plateforme surélevée n'est alors pas horizontale.

La portion verticale 12 du bâti 6 permet également de s'assurer du bon positionnement et de la bonne inclinaison du dispositif de soulèvement 1 lorsque celui-ci est monté sur la plateforme surélevée 4, en venant se positionner en appui, et donc contre, le chant de la plateforme surélevée 4. On s'assure ainsi que la portion verticale 12 du bâti 6 soit bien perpendiculaire à la surface supérieure de la plateforme surélevée 4, tout le long de son utilisation.

La portion horizontale 14 du bâti 6 est destinée à former une zone de transition pour la charge 2, entre le moyen de réception mobile 8 et la plateforme surélevée 4. A cet effet, et afin de faciliter le déplacement de la charge 2 entre le moyen de réception mobile 8 et la plateforme surélevée 4, la portion horizontale 14 peut comprendre des moyens de glissement, par exemple des rouleaux 18 montés libres en rotation par rapport à un axe horizontal A perpendiculaire au sens de déplacement de la charge 2.

Le moyen de réception mobile 8 est la partie mobile du dispositif de soulèvement 1 sur laquelle la charge 2 est placée et qui permet de la soulever jusqu'à la hauteur de la plateforme surélevée 4. Le moyen de réception mobile 8 comprend ainsi une surface de réception 20 sur laquelle, ou au-dessus de laquelle, vient se placer la charge 2. La surface de réception porte donc, ou supporte, la charge 2. De manière similaire à la portion horizontale 14 du bâti 2, la surface de réception 20 peut comprendre des moyens de glissement, par exemple des rouleaux montés libres en rotation par rapport à un axe horizontal A perpendiculaire au sens de déplacement de la charge 2. Des butées latérales peuvent également être prévues pour maintenir la charge 2 en place sur la surface de réception 20, par exemple des butées 22 sur les côtés de la surface de réception 20, et une butée d'extrémité 24 permettant d'empêcher la charge 2 de glisser de la surface de réception 20, en direction opposée au bâti 6 et donc à la plateforme surélevée 4.

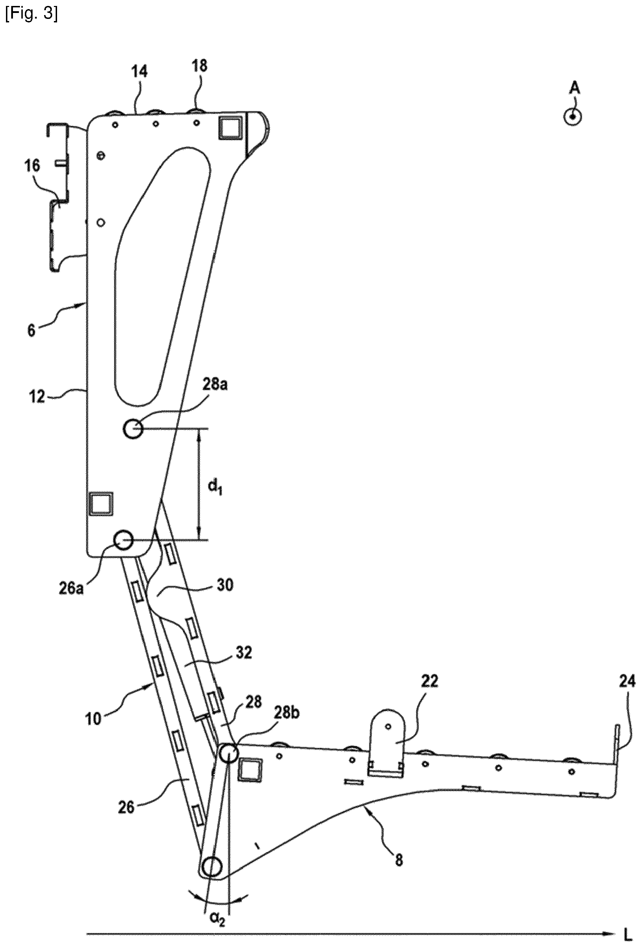

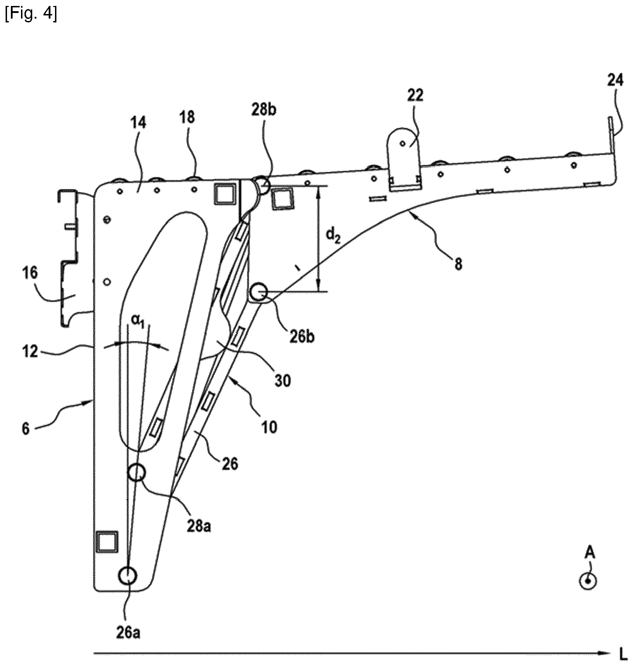

Le moyen de réception mobile 8 peut prendre deux configurations, ou positions, principales : une configuration, ou position, basse (voir figure 3) pour permettre le positionnement de la charge 2 sur la surface de réception ou bien pour permettre le remplissage de la charge 2 positionnée sur la surface de réception, et une configuration, ou position, haute (voir figure 4) pour permettre le déplacement de la charge 2 depuis le moyen de réception mobile 8 vers la plateforme surélevée 4 via la portion horizontale 14 du bâti 6. Le moyen de réception mobile 8 est ainsi entraîné, notamment en translation sensiblement circulaire, entre les configurations haute et basse, afin de pouvoir soulever la charge 2 et l'amener à la hauteur de la plateforme 4.

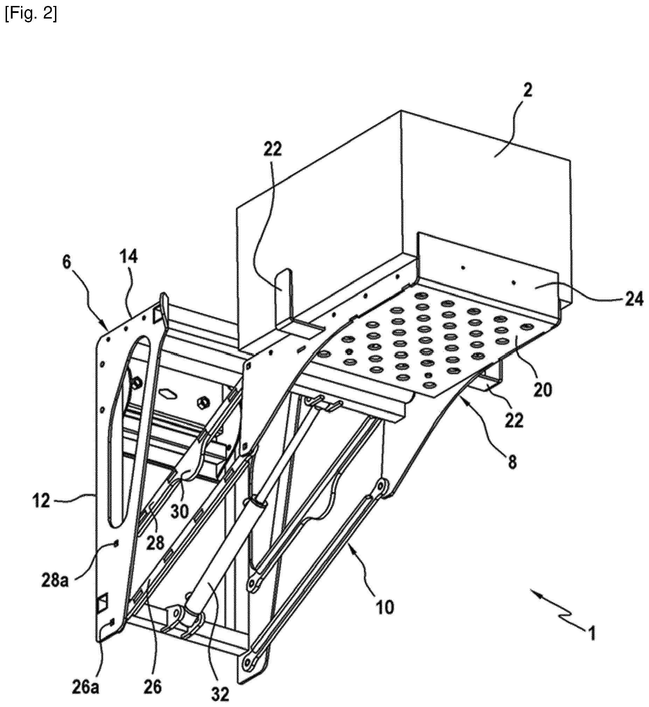

Pour pouvoir lever le moyen de réception 8, le moyen de levage 10 comprend, dans le cas illustré sur les figures 1 à 5, deux paires de bielles disposées de chaque côté du dispositif de soulèvement 1. A des fins de simplification, seule une paire de bielles est décrite plus en détails ci-dessous.

Le moyen de levage 10 comporte ainsi une bielle inférieure 26 et une bielle supérieure 28 qui sont sensiblement parallèles entre elles et, de préférence, de même longueur, de manière à former un quadrilatère proche d'un parallélogramme. Chaque bielle 26, 28 est montée, par une première extrémité 26a, 28a, au bâti 6 et, par une deuxième extrémité 26b, 28b, au moyen de réception 8. Les extrémités 26a, 26b, 28a, 28b des bielles 26, 28 sont notamment montées par liaison pivot sur le bâti 6 et sur le moyen de réception 8. Les deux bielles 26, 28 peuvent ainsi pivoter de manière à former un quadrilatère déformable, correspondant sensiblement à un parallélogramme déformable, pour permettre le déplacement du moyen de réception 8 d'une configuration à une autre, selon une translation sensiblement circulaire. Le mouvement de translation sensiblement circulaire permet ainsi de faire décrire, à la surface de réception 20, une trajectoire en forme d'arc de cercle tout en restant sensiblement horizontale.

En particulier, lors de la déformation du quadrilatère formé par les bielles 26, 28, celles-ci vont rester sensiblement parallèles entre elles tout en pivotant autour de leur première extrémité 26a, 28a. Afin de limiter leur rapprochement, et éventuellement le blocage du moyen de levage 10 dans les configurations extrêmes haute et basse, une butée 30 peut être prévue sur un côté d'une des bielles, par exemple sur un côté inférieur de la bielle supérieure 28. La butée 30 permet notamment d'empêcher la bielle inférieure 26 de s'en rapprocher de trop près, et donc aux deux bielles 26, 28, de pivoter de manière trop importante autour de leur première extrémité 26a, 28a.

Enfin, afin d'entraîner un tel système de bielles, le moyen de levage 10 comprend également un moyen d'assistance, par exemple un vérin hydraulique 32. Le but du moyen d'assistance est donc de déformer le quadrilatère formé par les bielles 26, 28, afin de déplacer le moyen de réception 8 entre la configuration basse et la configuration haute. A cet effet, le moyen d'assistance est de préférence monté selon une diagonale du quadrilatère formé par les bielles 26, 28. Le vérin hydraulique 32 peut avantageusement être monté de manière à se déployer lors du changement de la configuration basse à la configuration haute du moyen de réception 8, et de manière à se rétracter lors du changement de la configuration haute à la configuration basse du moyen de réception 8. La butée 30 permet alors également de limiter les efforts à fournir par le moyen d'assistante, notamment en bouts de course.

Le moyen d'assistance peut être un moyen actif permettant le changement de configuration du moyen de réception 8 par actionnement d'une commande, par exemple électrique, pneumatique ou hydraulique. Alternativement, le moyen d'assistance peut être un moyen passif permettant d'apporter une aide à l'utilisateur lorsque celui-ci effectue le changement de configuration du moyen de réception 8, de manière à réduire la force nécessaire à l'utilisateur pour effectuer un tel changement.

Afin de faciliter plus encore l'utilisation du dispositif de soulèvement 1, la surface de réception 20 est configurée pour pivoter entre la configuration basse et la configuration haute. En particulier, en configuration basse (voir figure 3), la surface de réception est inclinée par rapport à l'horizontale de manière à ce que son extrémité avant soit à une hauteur légèrement inférieure à son extrémité arrière. A l'inverse, en configuration haute (voir figure 4), la surface de réception est inclinée par rapport à l'horizontale de manière à ce que son extrémité avant soit à une hauteur légèrement supérieure à son extrémité arrière.

Ainsi, en configuration basse, une charge 2 positionnée sur la surface de réception 20 va venir se positionner contre la butée 24 d'extrémité avant, tandis qu'en configuration haute, la charge 2 va au contraire être amenée à glisser vers la portion horizontale 14 du bâti 6 puis vers la plateforme 4, le long d'une direction longitudinale L, de manière à limiter l'effort nécessaire au déplacement de la charge 2.

La surface de réception 20 est donc pivotée entre les configurations basse et haute, autour d'un axe A.

A cet effet, la distance d₁ (voir figure 3) entre les premières extrémités 26a, 28a des deux bielles peut être différente de la distance d₂ (voir figure 4) entre les deuxièmes extrémités 26b, 28b. Ainsi, la distance d₁ peut être inférieure à la distance d₂. De même, les premières extrémités 26a, 28a peuvent s'étendre selon une direction formant un angle α₁ (voir figure 4) par rapport à la verticale, et les deuxièmes extrémités 26b, 28b peuvent s'étendre selon une direction formant un angle α₂ (voir figure 3) par rapport à la verticale. Les angles α₁ et α₂ peuvent être égaux ou bien légèrement différents, par exemple l'angle α₂ peut être légèrement supérieur à l'angle α₁. Une telle configuration permet également de limiter les risques de blocage du moyen de levage 10, notamment en cas de jeux dans les dimensions des bielles ou dans les positions des extrémités 26a, 26b, 28a, 28b des deux bielles 26, 28.

Afin d'éviter un éventuel déplacement de la charge 2 vers le bâti 6 lors du passage de la configuration basse à la configuration haute du moyen de réception 8, le dispositif de soulèvement 1 peut comprendre une butée (non représentée) configurée pour maintenir la charge 2 sur la surface de réception 20 tant que le moyen de réception 8 n'est pas en configuration haute. Une telle butée peut être par exemple une butée rotative entraînée par les deuxièmes extrémités 26b, 28b des deux bielles 26, 28, et configurée pour bloquer la charge 2 en position basse et entre la position basse et la position haute, et configurée pour s'escamoter lorsque le moyen de réception 8 est en position haute.

La figure 5 représente une machine agricole 40 selon un autre aspect de l'invention. La machine agricole 40 comporte une plateforme surélevée 4, ainsi que deux convoyeurs 42 positionnés de part et d'autre de ladite plateforme surélevée 40. La machine agricole 40 comporte également plusieurs dispositifs de soulèvement 1 tels que décrits précédemment, montés sur un côté de la plateforme surélevée 4, et sur un côté des convoyeurs 42. Les dispositifs de soulèvement 1 sont ainsi régulièrement répartis sur toute la largeur de la machine agricole 40, en fonction de l'écartement des rangs de vignes dans lesquels la machine agricole va être amenée à se déplacer. Plus particulièrement, au fur et à mesure des vendanges, les dispositifs de soulèvement 1 permettent de soulever les différentes caisses remplies de raisins à hauteur de la plateforme surélevée 4 pour y être récupérées soit directement, soit par l'intermédiaire des convoyeurs latéraux 42.

Préférentiellement, les convoyeurs 42 peuvent être montés pivotant sur la plateforme surélevée 4, de manière à pouvoir se replier, par exemple verticalement, en-dehors des vendanges, afin de limiter l'encombrement latéral de la machine agricole 40.

Afin d'améliorer la stabilité et l'horizontalité de la plateforme surélevée 4 lors du passage dans les rangs de vignes, celle-ci peut également comprendre un ou plusieurs moyens de support 44, par exemple des roues montées sur vérin. Les roues peuvent être ainsi reliées à la plateforme via uniquement un système de suspension, afin de limiter les contraintes liées au porte-à-faux de la plateforme, et/ou via un système de déploiement permettant de modifier la distance nominale entre la plateforme 4 et la roue, afin de régler directement la hauteur de la plateforme 4 par rapport au sol, et son inclinaison.

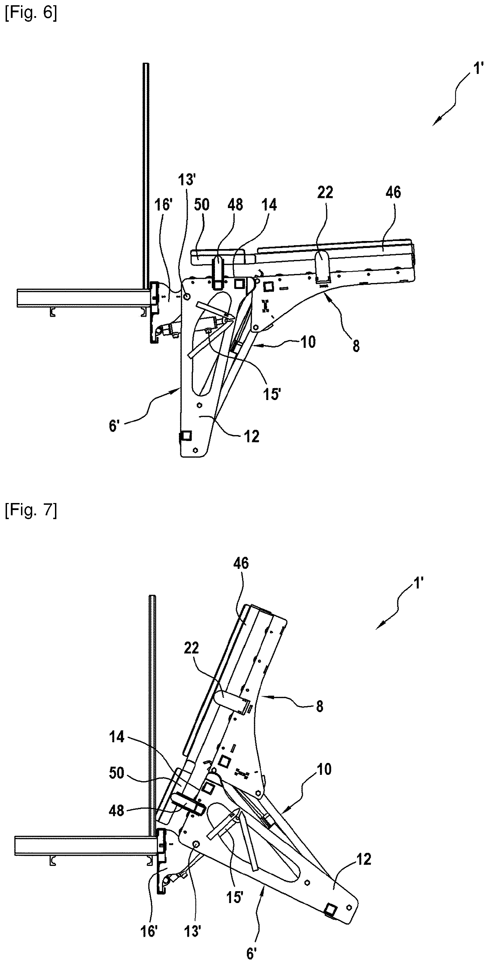

Les figures 6 et 7 illustrent un second mode de réalisation d'un dispositif de soulèvement 1' d'une charge selon la présente invention. Dans ce deuxième mode de réalisation, les éléments identiques au premier mode de réalisation sont désignés par les mêmes références.

Dans ce deuxième mode de réalisation, le dispositif de soulèvement 1' est conçu pour présenter, en plus d'une configuration d'utilisation similaire à celle du dispositif de soulèvement 1 décrit précédemment, une configuration relevée dans laquelle le dispositif de soulèvement 1' est surélevé, et en particulier au niveau du porte-à-faux.

En effet, le dispositif de soulèvement 1' s'étend depuis une extrémité de la plateforme surélevée 4, c'est-à-dire au niveau du porte-à-faux de la plateforme surélevée 4 qu'il peut d'ailleurs augmenter selon la direction longitudinale L. Or, le dispositif de soulèvement 1' s'étend également verticalement, vers le bas, ce qui augmente l'encombrement au niveau du porte-à-faux, et peut éventuellement limiter la manœuvrabilité de la machine agricole dans les champs, et notamment lors des virages ou demi-tours en bout de rang de vignes.

Afin de limiter cet encombrement, et faciliter les manœuvres de la machine agricole dans les champs, notamment au niveau de son porte-à-faux, le dispositif de soulèvement 1' selon le deuxième mode de réalisation comprend un bâti 6' configuré pour présenter deux configurations : une configuration d'utilisation, et une configuration relevée dans laquelle le bâti 6' est incliné vers le haut par rapport à la plateforme surélevée 4.

A cet effet, le bâti 6' est monté en rotation sur le moyen de montage 16', de préférence avec une liaison pivot 13' prévue à proximité d'une extrémité supérieure de la portion verticale 12 du bâti 6'. De plus, le bâti 6' comprend également un moyen de relevage, par exemple un vérin 15', notamment hydraulique, monté entre le moyen de montage 16' et le bâti 6', par exemple entre une extrémité inférieure du moyen de montage 16' et le bâti 6'.

Ainsi, grâce à la liaison pivot 13' et au vérin 15', il devient alors possible d'incliner le bâti 6' par rapport au moyen de montage 16', et donc d'augmenter la hauteur du dispositif de soulèvement 1' par rapport à la configuration d'utilisation.

Par ailleurs, un tel montage permet également, en configuration d'utilisation, et en particulier lorsque la machine agricole travaille sur un terrain incliné par rapport à l'horizontale, d'incliner également le dispositif de soulèvement 1' de manière à obtenir un moyen de réception 8 orienté sensiblement horizontalement, et donc une surface de réception orientée sensiblement horizontalement. En effet, la récupération des grappes de raisins dans les rangs de vignes s'effectue généralement dans le sens montant de la pente : ainsi, en cas de terrain incliné, un dispositif de soulèvement 1' monté à l'arrière de la plateforme surélevée 4 va se retrouver avec un bâti dont l'angle α₁ par rapport à la verticale sera plus grand dans la configuration d'utilisation nominale. Grâce à la liaison pivot 13' et au vérin 15', il devient alors possible d'incliner le bâti 6' de manière à réorienter la surface de réception sensiblement horizontalement, même si le terrain est lui-même incliné par rapport à l'horizontale.

Le dispositif de soulèvement 1' selon le deuxième mode de réalisation peut également comporter un ou plusieurs moyens de maintien d'une charge sur le dispositif de soulèvement 1'. Plus précisément, le moyen de réception mobile 8 peut comprendre, en plus des butées 22, 24, un ou plusieurs rails périphériques 46 montés sur une ou plusieurs desdites butées 22, 24. Le ou les rails périphériques 46 permettent de mieux maintenir la charge sur la surface de réception 20, mais également de faciliter le dépôt de la charge sur la surface de réception 20. Par exemple, le ou les rails périphériques 46 peuvent comprendre une portion inférieure sensiblement verticale et une portion supérieure évasée, par rapport à la direction verticale, vers l'extérieur de la surface de réception 20, de manière à guider la charge en train d'être déposée vers la surface de réception 20.

De même, le bâti 6' peut également comprendre, sur chaque côté de la portion horizontale 14, une butée latérale 48 et un rail périphérique 50. En particulier, les rails périphériques 50 sont configurés pour coopérer, lorsque le moyen de réception 8 est en position haute, avec le ou les rails périphériques 46. A cet effet, les rails périphériques 50 peuvent comprendre, au niveau de leur extrémité distale, une portion évasée, par rapport à la direction longitudinale, vers l'extérieur, de manière à venir guider une extrémité proximale du ou des rails périphériques 46 dans la continuité avec les rails périphériques 50 lorsque le moyen de réception 8 est en position haute. De même, les rails périphériques 50 peuvent également présenter une portion supérieure évasée, par rapport à la direction verticale, vers l'extérieur, de manière similaire au ou aux rails périphériques 46.

Ainsi, grâce à la présente invention, il devient possible charger différentes charges, notamment des caisses remplies de raisins, sur une plateforme mobile surélevée, tout en limitant les efforts à fournir. Le dispositif selon l'invention permet notamment de récupérer directement dans les rangs de vignes et au fur et à mesure des vendanges, les caisses remplies de raisins. Il est ainsi possible de limiter les efforts à fournir par les personnes en charge des vendanges, mais également de réduire le nombre de changements de contenants pour les raisins, pour ne pas les abimer ou altérer leur goût.

## Revendications

1. Dispositif de soulèvement (1, 1') d'une charge (2), vers une plateforme surélevée mobile (4), le dispositif de soulèvement (1) comportant :
- un bâti (6, 6') configuré pour être monté solidaire de ladite plateforme surélevée (4),
- un moyen de réception mobile (8) comprenant une surface de réception (20) configurée pour recevoir ladite charge (2), et
- un moyen de levage (10) monté sur le bâti (6) et configuré pour déplacer le moyen de réception (8) d'une position basse située sous la plateforme, à une position haute située sensiblement à la hauteur de la plateforme,
dans lequel le bâti (6, 6') est configuré pour être monté de manière amovible et/ou réglable en position, sur la plateforme surélevée (4).

2. Dispositif (1, 1') selon la revendication précédente, dans lequel le moyen de levage (10) est configuré pour orienter différemment, en position basse et en position haute, la surface de réception (20) du moyen de réception (8), par rapport à l'horizontale, de préférence dans lequel le moyen de levage (10) est configuré pour faire pivoter la surface de réception (20) du moyen de réception (8), par rapport à l'horizontale, entre la position basse et la position haute.

3. Dispositif (1, 1') selon la revendication **2,** dans lequel, en position haute, le moyen de réception (8) vient se positionner dans le prolongement du bâti (6, 6'), selon une direction longitudinale (L) sensiblement horizontale.

4. Dispositif (1, 1') selon la revendication **3,** dans lequel le moyen de levage (10) est configuré pour incliner, par rotation autour d'une direction (A) perpendiculaire à un plan vertical comprenant la direction longitudinale (L), la surface de réception (20) à l'opposé du bâti (6, 6'), en position basse, et/ou pour incliner, par rotation autour d'une direction (A) perpendiculaire à un plan vertical comprenant la direction longitudinale (L), la surface de réception (20) en direction du bâti (6, 6'), en position haute.

5. Dispositif (1, 1') selon l'une quelconque des revendications précédentes, dans lequel le moyen de levage (10) comporte, de chaque côté, deux bielles (26, 28) sensiblement parallèles dont les premières extrémités (26a, 28a) sont reliées, par des liaisons pivot, au bâti (6, 6') et dont les deuxièmes extrémités (26b, 28b) sont reliées, par des liaisons pivot, au moyen de réception (8).

6. Dispositif (1, 1') selon la revendication précédente, dans lequel les premières extrémités (26a, 28a) des deux bielles (26, 28) sont alignées sur le bâti (6, 6') selon une orientation sensiblement verticale, et dans lequel les deuxièmes extrémités (26b, 28b) des deux bielles (26, 28) sont alignées sur le moyen de réception (8) selon une orientation sensiblement verticale.

7. Dispositif (1, 1') selon la revendication 5 **ou** 6, dans lequel la distance entre les deuxièmes extrémités (26b, 28b) des deux bielles est plus grande que la distance entre les premières extrémités (26a, 28a) des deux bielles.

8. Dispositif (1, 1') selon la revendication **5, 6 ou** 7, dans laquelle le moyen de levage (10) comporte également, au moins d'un côté, une butée (30) configurée pour maintenir la distance entre les deux bielles (26, 28) supérieure à une valeur déterminée.

9. Dispositif (1, 1') selon l'une des revendications précédentes, comportant également un moyen d'assistance, par exemple un vérin hydraulique (32), configuré pour entraîner le moyen de levage (10), au moins de la position basse à la position haute.

10. Dispositif (1) selon l'une quelconque des revendications précédentes, dans lequel le bâti comprend un moyen de montage (16') amovible et/ou réglable en position pour être monté de manière amovible et/ou réglable en position, sur la plateforme surélevée (4), dans lequel le bâti (6') est monté pivotant sur le moyen de montage (16'), et dans lequel le bâti (6') comprend un moyen de relevage, par exemple un vérin (15'), notamment hydraulique, configuré pour incliner le bâti (6') vers le haut par rapport au moyen de montage (16'), notamment autour d'une direction perpendiculaire à un plan vertical comportant la direction longitudinale.

11. Dispositif (1, 1') selon l'une quelconque des revendications précédentes, dans lequel le bâti (6, 6') présente une forme d'équerre avec une portion verticale (12) destinée à venir se fixer ou à être solidaire de la plateforme (4), et une portion horizontale (14) à proximité d'une extrémité supérieure de la portion verticale (12), et destinée à venir dans le prolongement du moyen de réception (8) en position haute.

12. Dispositif (1, 1') selon l'une quelconque des revendications précédentes, dans lequel le moyen de levage (10) et/ou le moyen de réception (8) comporte au moins une butée configurée pour se déployer afin de maintenir la charge (2) sur le moyen de réception (8) lorsque ledit moyen de réception (8) n'est pas en position haute, et configurée pour s'escamoter lorsque le moyen de réception (8) est en position haute.

13. Machine agricole (40), de préférence mobile, pour le chargement de caisses (2), comprenant une plateforme (4) de stockage de caisses, et un ou plusieurs dispositifs de soulèvement (1, 1') selon l'une des revendications précédentes.

14. Machine agricole (40) selon la revendication précédente, comprenant également un ou plusieurs convoyeurs (42) montés sur la plateforme (4), et au moins un dispositif de soulèvement (1, 1') selon l'une des revendications 1 à 12 monté sur le ou chaque convoyeur (42).

15. Machine (40) agricole selon la revendication 13 ou 14, comprenant également un moyen de support (44), par exemple une ou plusieurs roues montées sur vérin, configuré pour permettre un maintien de la plateforme (4) dans un plan sensiblement horizontal lors de ses déplacements.
